(19) Europäisches Patentamt

European Patent Office

Office européen des brevets

(11) Veröffentlichungsnummer: **0 265 656 B1**

(12) **EUROPÄISCHE PATENTSCHRIFT**

(45) Veröffentlichungstag der Patentschrift: **06.05.92**

(21) Anmeldenummer: **87113657.8**

(22) Anmeldetag: **18.09.87**

(51) Int. Cl.⁵: **B60B 21/12**, B60B 21/02, B60C 17/01, B60B 21/10

(54) **Fahrzeugrad.**

(30) Priorität: **28.10.86 DE 3636631**

(43) Veröffentlichungstag der Anmeldung:
**04.05.88 Patentblatt 88/18**

(45) Bekanntmachung des Hinweises auf die Patenterteilung:
**06.05.92 Patentblatt 92/19**

(84) Benannte Vertragsstaaten:
**AT BE CH DE ES FR GB GR IT LI LU NL SE**

(56) Entgegenhaltungen:
**EP-A- 0 168 688**
**DE-A- 2 509 939**
**DE-U- 8 607 101**
**FR-A- 2 259 707**

(73) Patentinhaber: **Continental AG**
**Königsworther Platz 1 Postfach 1 69**
**W-3000 Hannover 1(DE)**

(72) Erfinder: **Theusner, Martin, Dr. Dipl.-Chem.**
**Franzburger Strasse 13**
**W-3007 Gehrden(DE)**

**Beschreibung**

Die Erfindung betrifft ein luftbereiftes Fahrzeugrad nach dem Oberbegriff von Patentanspruch 1.

In der DE-A-35 05 386 wird ein Fahrzeugrad gemäß dem Oberbegriff von Anspruch 1 beschrieben, das besonders gut für einen sogenannten Pannenlauf geeignet ist, d. h. für einen weiteren Betrieb nach einem Reifendefekt. Auf den seitlichen Stützflächen des Felgenkranzes befindet sich je ein Notlaufring, der das Felgentiefbett zum Teil überdeckt, und im Falle eines Pannenlaufs geringfügig einfedern kann. Bei diesem Fahrzeugrad werden sehr hohe Anforderungen an die Materialeigenschaft der Notlaufringe gestellt.

In der älteren nicht vorveröffentlichten Patentanmeldung DE-A-35 31 177.0 wird ebenfalls ein Fahrzeugrad der eingangs genannten Art offenbart, bei dem jedoch das Felgentiefbett durch einen ringförmigen Stützkörper vollständig überbrückt ist. Damit wird zwar die Stützfläche für einen Pannenlauf vergrößert, doch zeigt das Fahrzeug noch nicht ein optimales Federungsverhalten beim Pannenlauf.

Aus der DE-A-25 09 939 ist ein konventionelles Fahrzeugrad bekannt, bei dem sich im Reifeninnenraum ein Notlaufstützschlauch befindet. Dabei füllt der Stützschlauch außer dem Felgentiefbett auch noch den größten Teil des Fahrzeuginnenraums aus. Derartige Radsysteme sind in vielfältigen Varianten vorgeschlagen worden, konnten sich jedoch nicht durchsetzen.

Der Erfindung liegt die Aufgabe zugrunde, ein Fahrzeugrad der eingangs genannten Art dahingehend weiterzuentwickeln, daß sich ein verbesserter Fahrkomfort bei einem Pannenlauf ergibt.

Diese Aufgabe wird erfindungsgemäß durch die Merkmale des Patentanspruchs 1 gelöst.

Durch das Ausfüllen des Felgentiefbettraums mit einem aufblasbaren Schlauch wird das Federungsverhalten bei einem Pannenlauf entscheidend verbessert, weil in Verbindung mit einer ringförmigen elastischen Stützplatte das Luftvolumen des Schlauchs zum Einfedern beiträgt. Weiterhin läßt sich durch eine Variation des Luftdrucks im Schlauch das Federungsverhalten in definierter Weise verändern. Durch die Verwendung eines dünnwandigen Gummischlauchs ändert sich das Systemgewicht von Reifen und Stützfläche gegenüber den vorbekannten Fahrzeugrädern in nicht nennenswerter Weise. Die Erfindung bietet sogar einen Vorteil beim normalen Fahrbetrieb, weil im Falle von Durchschlägen der Reifen nicht auf metallische Stützflächen der Felge aufprallt, sondern zuerst den mittleren Bereich der Stützplatte berührt und dort mittels einer Kompression des Schlauchvolumens abgefedert wird.

Weitere vorteilhafte Ausgestaltungen der Erfindung sind den Unteransprüchen zu entnehmen.

Nachfolgend wird ein Ausführungsbeispiel der Erfindung anhand einer Zeichnung näher erläutert:

Es zeigt:

Fig. 1    ein Fahrzeugrad mit einem Schlauch im Tiefbett und einer übergreifenden ringförmigen Stützplatte in einem radialen Teilschnitt,

Fig 2    eine Felge gemäß Figur 1 mit einem Schlauch im Tiefbett, in den eine Stützplatte integriert ist,

Fig. 3    ein Fahrzeugrad mit einem Schlauch im Tiefbett und einer dreigeteilten Stützplatte in Pannenlaufstellung in einem radialen Teilschnitt .

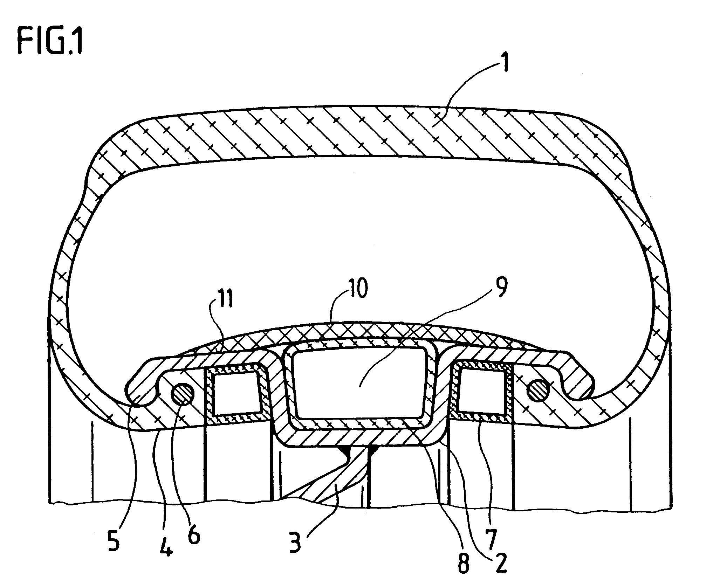

Beim Fahrzeugrad der Figur 1 kann der verwendete Fahrzeugluftreifen 1 als üblicher Radialreifen aufgebaut sein. Da es sich um ein für einen Pannenlauf geeignetes Fahrzeugrad handelt, kommt nur ein Schlauchlosreifen in Frage, so daß sich auf der Innenseite des Reifens 1 in üblicher Weise eine luftundurchlässige Schicht befindet. Die bevorzugt metallische Felge besteht im wesentlichen aus einem Felgenkranz 2, der in bekannter Weise an einer Schüssel 3 befestigt ist. Der Felgenkranz 2 dient zur Halterung der Reifenwülste 4 auf der radial inneren Seite neben Felgenhörnern 5. Dabei sorgen zug- und druckfeste Wulstkerne 6 für einen sicheren Sitz des Reifens 1 auf der Felge. Die Montageräume neben den Reifenwülsten 4 können mit sogenannten Abdeckringen 7 ausgefüllt sein. Die radial äußeren Teile des Felgenkranzes 2 dienen als Felgenstützflächen zur Abstützung des Reifens bei einem Pannenlauf. Ein Gummischlauch 8, der mit einem nicht gezeichneten Ventil versehen ist, nimmt im aufgeblasenen Zustand im wesentlichen den Raum des radial außen befindlichen Felgentiefbetts 9 ein. Auf dem Gummischlauch 8 liegt eine ringförmige Stützplatte 10 auf, die im Beispiel der Figur 1 seitlich über das Tiefbett 9 hinausragt und sich dort auf Stützflächen 11 des Felgenkranzes 2 abstützt. Die Stützplatte 10 verläuft in Querrichtung leicht gewölbt, so daß sie im Bereich des Felgentiefbetts 9 ihren größten Außendurchmesser aufweist. Sie besteht bevorzugt aus Gummi, kann jedoch auch aus Kunststoff hergestellt sein. Im Falle einer Gummistützplatte 10 können Festigkeitsträger in bekannter Weise eingebettet sein. Bei Fahrzeugrädern für Personenkraftwagen haben sich für die Stützplatte 10 Dicken zwischen 3 und 8 mm als zweckmäßig herausgestellt. Die Stützplatte 10 kann am Schlauch 8 anvulkanisiert oder angeklebt sein, ebenso am Felgenkranz 2 im Bereich der Stützflächen 11.

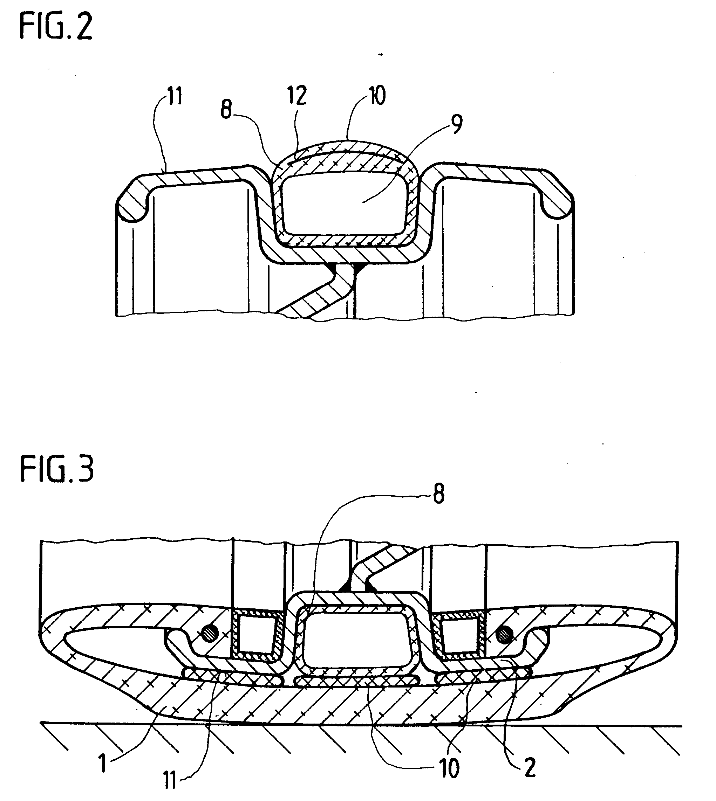

In Figur 2 ist die Felge des Fahrzeugrads der Figur 1 dargestellt. Im Tiefbett 9 befindet sich jedoch ein Schlauch 8, der auf der radial äußeren Seite eine in ihn eingearbeitete ballige Stützplatte 10 aufweist, die mit zumindest einer Lage von Festigkeitsträgern 12 versehen ist, und deren Breite etwa der Breite des Felgentiefbetts 9 entspricht. Entscheidend ist, daß die radial äußere Fläche der Stützplatte 10 einen größeren Durchmesser aufweist als die Felgenstützflächen 11, so daß im Falle eines Pannenlaufs oder Durchschlags der Reifen sich zuerst auf die Stützplatte 10 mit dem Schlauch 8 auflegt und dort federnd aufgefangen wird.

Figur 3 zeigt ein Fahrzeugrad in Pannenlaufstellung. Dabei stimmen Felge, Reifen und Schlauch 8 im wesentlichen mit denen der Figur 1 überein. Der Unterschied besteht darin, daß die ringförmige Stützplatte 10 in dem Sinne dreigeteilt ist, daß ihr mittlerer Teil etwa die Breite des Schlauches 8 aufweist und bevorzugt mit diesem verbunden ist, während die beiden seitlichen Teile an den Felgenstützflächen 11 angeklebt sind.

Im Bereich der Reifenaufstandsfläche wird zunächst der mittlere Teil der Stützplatte 10 belastet, wobei er durch ein Einfedern des Schlauches 8 aufgefangen wird. Zum Auffangen der restlichen Kräfte dienen dann die beiden seitlichen Teile der Stützplatte 10. Das Federungsverhalten eines erfindungsgemäßen Fahrzeugrades im Falle eines Pannenlaufs oder eines Durchschlags wird entscheidend durch die Wahl des Luftdrucks im Schlauch 8 mitbestimmt. Somit erhält man ohne wesentliche Mehrkosten und ohne ein nennenswertes Mehrgewicht ein Fahrzeugrad mit einem im Pannenlauf wesentlich verbesserten Fahrkomfort.

**Patentansprüche**

1. Luftbereiftes Fahrzeugrad mit einer starren Felge, die sich im wesentlichen nach radial innen erstrekende Felgenhörner (5) und radial außen angeordnete Pannenlaufstützflächen (11) aufweist, die weiterhin radial außen mit einem Tiefbett (9) und radial innen mit je einem Montagehochbett versehen ist, und mit einem Fahrzeugluftreifen, der mit seinen Wülsten (4) auf der radial inneren Seite der Felge neben den Felgenhörnern (5) befestigt ist, weiterhin mit einer ringförmigen elastischen Stützplatte (10) zumindest im Bereich des Felgentiefbetts, (9) deren Außendurchmesser im wesentlichen so groß ist wie der Außendurchmesser der benachbarten Felgenteile, dadurch gekennzeichnet, daß der Tiefbettraum im wesentlichen von einem aufblasbaren Gummischlauch (8) in seiner gesamten Erstreckung ausgefüllt ist und daß die Stützplatte (10) sich auf dem aufgeblasenen Schlauch (8) abstützt.

2. Fahrzeugrad nach Anspruch 1, dadurch gekennzeichnet, daß die Stützplatte (10) seitlich über das Tiefbett (9) hinausreicht, auf den Felgenstützflächen (11) aufliegt und insgesamt eine in Querrichtung leicht nach außen gewölbte Außenfläche aufweist

3. Fahrzeugrad nach Anspruch 1 oder 2, dadurch gekennzeichnet, daß die Stützplatte (10) in Querrichtung dreigeteilt ist, wobei die Teilungen etwa auf Höhe der Tiefbettseitenwände liegen.

4. Fahrzeugrad nach Anspruch 1, dadurch gekennzeichnet, daß die Stützplatte (10) am Schlauch (8) anvulkanisiert oder in den Schlauch (8) eingearbeitet ist.

5. Fahrzeugrad nach Anspruch 1, dadurch gekennzeichnet, daß die Stützplatte (10) aus Gummi oder Kunststoff besteht.

6. Fahrzeugrad nach Anspruch 1 und 5, dadurch gekennzeichnet, daß im Fall einer Gummistützplatte (10) Festigkeitsträger (12) eingelagert sind.

7. Fahrzeugrad nach Anspruch 1, dadurch gekennzeichnet, daß die ringförmige Stützplatte (10) im Mittel zwischen 3 und 8 mm dick ist.

**Claims**

1. Vehicle wheel fitted with a pneumatic tyre, comprising a rigid rim, which has rim flanges (5) extending substantially radially inwardly, and run-on supporting faces (11), which are disposed radially externally, which rim is also provided radially externally with a drop base (9) and radially internally with a respective assembly high bed, said wheel comprising a pneumatic vehicle tyre, which is secured by its beads (4) on the radially inner surface of the rim adjacent the rim flanges (5), and further comprising an annular, resilient supporting plate (10) at least in the region of the rim drop base (9), the external diameter of said plate being substantially as large as the external diameter of the adjacent rim portions, characterised in that the drop base chamber is substantially filled with an inflatable rubber tube (8), and in that the supporting plate (10) is supported on the tube (8), when it is inflated to its full extent.

2. Vehicle wheel according to claim 1, characterised in that the supporting plate (10) extends laterally beyond the drop base (9), lies on the rim supporting faces (11) and generally has an outer surface which is curved slightly outwardly when viewed with respect to the transverse direction.

3. Vehicle wheel according to claim 1 or 2, characterised in that the supporting plate (10) is divided into three when viewed with respect to the transverse direction, the divided portions lying approximately on a level with the lateral walls of the drop base.

4. Vehicle wheel according to claim 1, characterised in that the supporting plate (10) is prevulcanised on the tube (8) or is incorporated into the tube (8).

5. Vehicle wheel according to claim 1, characterised in that the supporting plate (10) is formed from rubber or plastics material.

6. Vehicle wheel according to claims 1 and 5, characterised in that reinforcing members (12) are embedded in the case where a single rubber supporting plate (10) is provided.

7. Vehicle wheel according to claim 1, characterised in that the annular supporting plate (10) has an average thickness of between 3 and 8 mm.

**Revendications**

1. Roue de véhicule équipée d'un pneumatique, avec une jante rigide qui présente des rebords de jante (5) s'étendant essentiellement radialement vers l'intérieur et des faces de soutien de marche à plat (11) disposées radialement à l'extérieur, et qui est en outre munie d'une base creuse (9) radialement à l'extérieur et d'une base rehaussée de montage radialement à l'intérieur, et avec un pneumatique de véhicule qui est fixé par ses talons (4) à côté des rebords de jante (5) sur le côté radialement intérieur de la jante, avec en outre une plaque de soutien élastique annulaire (10) au moins dans la région de la base creuse (9) de la jante, plaque dont le diamètre extérieur est sensiblement égal au diamètre extérieur des parties voisines de la jante, **caractérisée** en ce que l'espace formé par la base creuse est pour l'essentiel rempli par une chambre à air en caoutchouc (8) gonflable, et en ce que la plaque de soutien (10) s'appuie sur la chambre à air (8) gonflée sur toute sa longueur de développement.

2. Roue de véhicule selon la revendication 1, caractérisée en ce que la plaque de soutien (10) s'étend latéralement au-delà de la base creuse (9), repose sur les faces de soutien (11) de la jante et présente globalement une surface extérieure qui est légèrement bombée vers l'extérieur en direction transversale.

3. Roue de véhicule selon la revendication 1 ou 2, caractérisée en ce que la plaque de soutien (10) est divisée en trois parties en direction transversale, les divisions se trouvant approximativement à hauteur des parois latérales de la base creuse.

4. Roue de véhicule selon la revendication 1, caractérisée en ce que la plaque de soutien (10) est vulcanisée sur la chambre à air (8) ou incorporée dans la chambre à air (8).

5. Roue de véhicule selon la revendication 1, caractérisée en ce que la plaque de soutien (10) est réalisée en caoutchouc ou en matière plastique.

6. Roue de véhicule selon les revendications 1 et 5, caractérisée en ce que, dans le cas d'une plaque de soutien (10) en caoutchouc, des éléments porteurs de résistance (12) y sont incorporés.

7. Roue de véhicule selon la revendication 1, caractérisée en ce que la plaque de soutien annulaire (10) présente en son milieu une épaisseur comprise entre 3 et 8 mm.

FIG.1

## FIG.2

## FIG.3